# EUROPÄISCHE PATENTSCHRIFT

(11) **EP 0 569 785 B1**
(45) Veröffentlichungstag und Bekanntmachung des Hinweises auf die Patenterteilung: **05.03.1997**
(21) Anmeldenummer: 93106939.7
(22) Anmeldetag: 29.04.1993
(51) Int. Cl.: C09B 67/22, B41M 5/26

(54) **Farbstoffmischungen für den Farbstofftransfer**
Dyestuff mixtures for dyestuff transfer
Mélanges de colorants pour le transfert de colorants

(30) Priorität: 12.05.1992 DE 4215535
(43) Veröffentlichungstag der Anmeldung: 18.11.1993
(73) Patentinhaber: BASF Aktiengesellschaft, 67063 Ludwigshafen (DE)
(72) Erfinder: Etzbach, Karl-Heinz, Dr., W-67227 Frankenthal (DE); Lamm, Gunther, Dr., W-6733 Hassloch (DE); Sens, Ruediger, Dr., W-6800 Mannheim 1 (DE)

(56) Entgegenhaltungen:
- US-A- 4 939 118
- US-A- 5 079 365

## Beschreibung

Die vorliegende Erfindung betrifft neue Farbstoffmischungen, enthaltend mindestens einen Azofarbstoff der Formel I 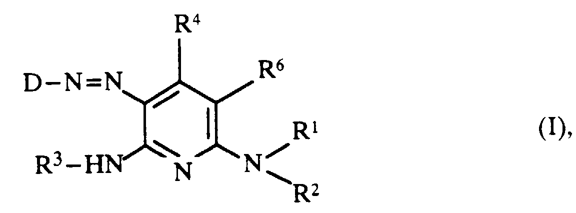 in der
- R¹, R² und R³: gleich oder verschieden sind und unabhängig von einander jeweils Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen können und durch Phenyl, C₁-C₄-Alkylphenyl, C₁-C₄-Alkoxyphenyl, Halogenphenyl, Benzyloxy, C₁-C₄-Alkylbenzyloxy, C₁-C₄-Alkoxybenzyloxy, Halogenbenzyloxy, Halogen, Hydroxy oder Cyano substituiert sein können, Wasserstoff, gegebenenfalls durch C₁-C₄-Alkyl, C₁-C₄-Alkoxy, Halogen oder Benzyloxy substituiertes Phenyl, gegebenenfalls durch C₁-C₄-Alkyl, C₁-C₄-Alkoxy, Halogen oder Benzyloxy substituiertes Cyclohexyl oder einen Rest der Formel

[-E-O]ₘ-R⁵ ,

worin
E für C₂-C₆-Alkylen
m für 1, 2, 3, 4, 5 oder 6 und
R⁵ für C₁-C₄-Alkyl oder gegebenenfalls durch C₁-C₄-Alkyl oder C₁-C₄-Alkoxy substituiertes Phenyl stehen,
- R⁴: C₁-C₄-Alkyl,
- R⁶: Cyano oder Carbamoyl und
- D: den Rest einer Diazokomponente bedeuten,
sowie mindestens einen Farbstoff der Formel II, III und/oder IV 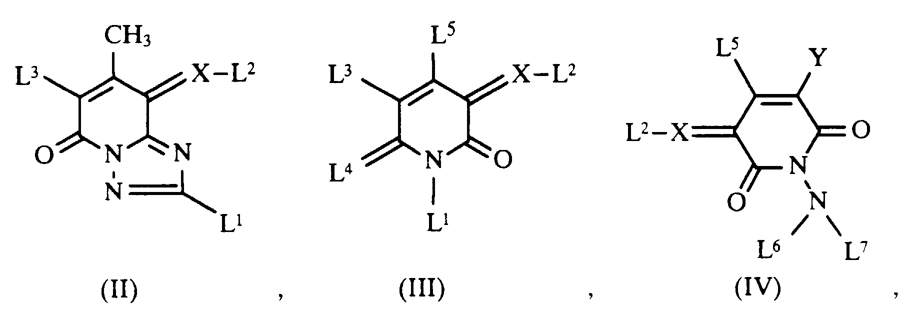 worin
- L¹: C₁-C₂₀-Alkyl, das gegebenenfalls substituiert ist und durch 1 bis 4 Sauerstoffatome in Etherfunktion unterbrochen sein kann, gegebenenfalls substituiertes Phenyl oder Hydroxy,
- L²: einen 5- oder 6-gliedrigen carbocyclischen oder heterocyclischen Rest,
- L³: Cyano, Carbamoyl, Carboxyl oder C₁-C₄-Alkoxycarbonyl,
- L⁴: Sauerstoff oder einen Rest der Formel

C(CN₂),

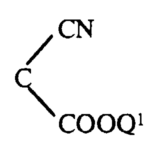

oder

C(COOQ¹)₂,

worin
Q¹ jeweils für C₁-C₈-Alkyl, das gegebenenfalls durch 1 oder 2 Sauerstoffatome in Etherfunktion unterbrochen ist, steht,
- X: CH oder Stickstoff,
- L⁵: Wasserstoff oder C₁-C₄-Alkyl,
- L⁶ und L⁷: gleich oder verschieden sind und unabhängig voneinander jeweils Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L⁶ und L⁷ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf- oder sechsgliedrigen gesättigten heterocyclischen Rest, der gegebenenfalls weitere Heteroatome enthält, und
- Y: Cyano oder einen Rest der Formel CO-Q², CO-OQ² oder CO-NHQ², worin Q² für Wasserstoff, C₁-C₈-Alkyl, das gegebenenfalls substituiert ist und durch ein oder zwei Sauerstoffatome in Etherfunktion unterbrochen sein kann, C₅-C₇-Cycloalkyl, Phenyl oder Tolyl steht, bedeuten,
sowie ein Verfahren zu ihrer thermischen Übertragung.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenen falls Schwarz) durchgeführt.

Es ist bekannt, das Thermotransferdruckverfahren mit einzelnen Farbstoffen oder auch mit Mischungen von Farbstoffen durchzuführen. Dabei hat sich jedoch gezeigt, daß die zur Anwendung kommenden Farbstoffe noch anwendungstechnische Mängel aufweisen.

Aufgabe der vorliegenden Erfindung war es daher, neue Farbstoffmischungen im Magentabereich bereitzustellen, die sich in vorteilhafter Weise zur thermischen Übertragung eignen.

Demgemäß wurden die eingangs näher bezeichneten Farbstoffmischungen gefunden.

Reste D können sich z.B. von einer Diazokomponente ableiten, die aus der Anilin-, Phenylazoanilin-, Aminothiophen-, Phenylazoaminothiophen-, Aminothiazol-, Phenylazoaminothiazol-, Aminoisothiazol- oder Aminothiadiazolreihe stammt.

Reste L² können sich z.B. von Komponenten aus der Benzol-, Indol-, Chinolin-, Aminonaphthalin-, Aminothiazol- oder Aminothiophenreihe ableiten.

Hervorzuheben sind Farbstoffmischungen, die mindestens einen Azofarbstoff der Formel I enthalten, in der sich der Rest D z.B. von einer Diazokomponente D-NH₂ der Formel 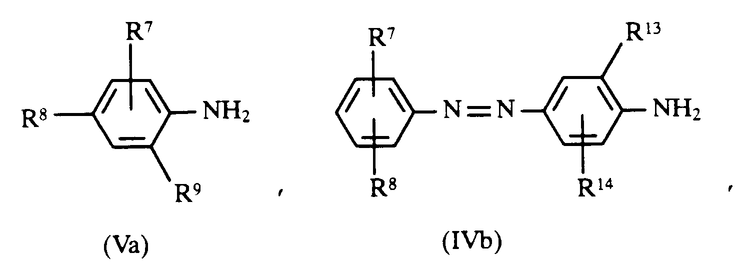 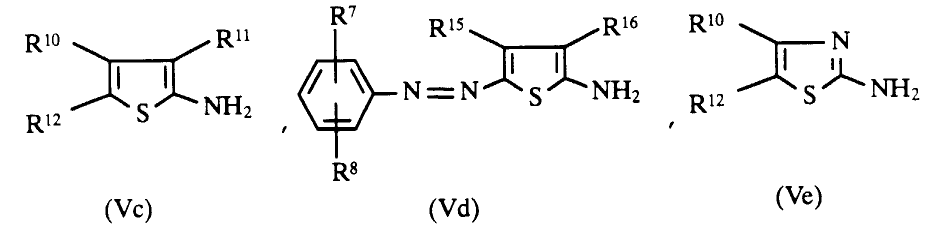 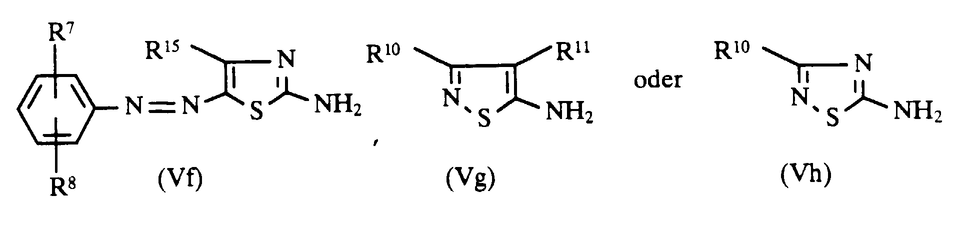 ableitet, wobei
- R⁷,R⁸ und R⁹: gleich oder verschieden sind und unabhängig voneinander jeweils Alkyl, Alkoxyalkyl, Alkoxycarbonylalkyl oder Alkanoyloxyalkyl, wobei diese Reste jeweils bis zu 12 Kohlenstoffatome aufweisen können, Wasserstoff, Cyano, Halogen, Nitro, einen Rest der Formel

[-E-O]ₘ-R⁵ ,

in der E, R⁵ und m jeweils die obengenannte Bedeutung besitzen, oder einen Rest der Formel -CO-OR¹⁷, -CO-NR¹⁷R¹⁸, -SO₂-R¹⁷, -SO₂-OR¹⁷ oder SO₂-NR¹⁷R¹⁸, worin R¹⁷ und R¹⁸ gleich oder verschieden sind und unabhängig voneinander jeweils für Alkyl, Alkoxyalkyl, Alkoxycarbonylalkyl oder Alkanoyloxyalkyl, wobei diese Reste jeweils bis zu 12 Kohlenstoffatome aufweisen können, Wasserstoff oder für einen Rest der Formel

[-E-O]ₘ-R⁵ ,

in der E, R⁵ und m jeweils die obengenannte Bedeutung besitzen, stehen,
- R¹⁰: Wasserstoff, Chlor, Cyano, C₁-C₈-Alkyl, C₁-C₈-Alkoxy, C₁-C₈-Alkylthio, Alkoxyalkyl, das bis zu 8 Kohlenstoffatome aufweisen kann, Phenyl, das gegebenenfalls durch C₁-C₄-Alkyl, C₁-C₄-Alkoxy oder Benzyloxy substituiert ist, Benzyl, Benzyloxy oder einen Rest der Formel -CO-OR¹⁷ oder -CO-NR¹⁷R¹⁸, worin R¹⁷ und R¹⁸ jeweils die obengenannte Bedeutung besitzen,
- R¹¹: Wasserstoff, Cyano, Nitro oder einen Rest der Formel -CO-OR¹⁷ oder -CO-NR¹⁷R¹⁸, worin R¹⁷ und R¹⁸ jeweils die obengenannte Bedeutung besitzen,
- R¹²: Cyano, Nitro, Formyl oder einen Rest der Formel
-CO-OR¹⁷, -CO-NR¹⁷R¹⁸, 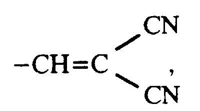 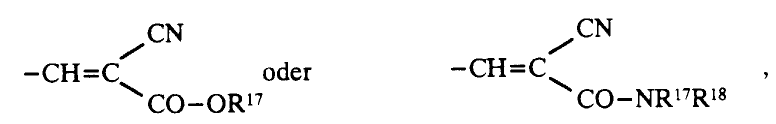 worin R¹⁷ und R¹⁸ jeweils die obengenannte Bedeutung besitzen,
- R¹³ und R¹⁴: gleich oder verschieden sind und unabhängig voneinander jeweils Wasserstoff, C₁-C₄-Alkyl, C₁-C₄-Alkoxy, Chlor, Cyano, Nitro oder einen Rest der Formel -CO-OR¹⁷ oder -CO-NR¹⁷R¹⁸, worin R¹⁷ und R¹⁸ jeweils die obengenannte Bedeutung besitzen,
- R¹⁵: Wasserstoff, C₁-C₄-Alkyl oder Chlor und
- R¹⁶: Cyano oder einen Rest der Formel -CO-OR¹⁷ oder -CO-NR¹⁷R¹⁸, worin R¹⁷ und R¹⁸ jeweils die obengenannte Bedeutung besitzen, bedeuten.

Weiterhin hervorzuheben sind Farbstoffmischungen, die mindestens einen Farbstoff der Formel II, III und/oder IV enthalten, wobei L² für einen Rest der Formel 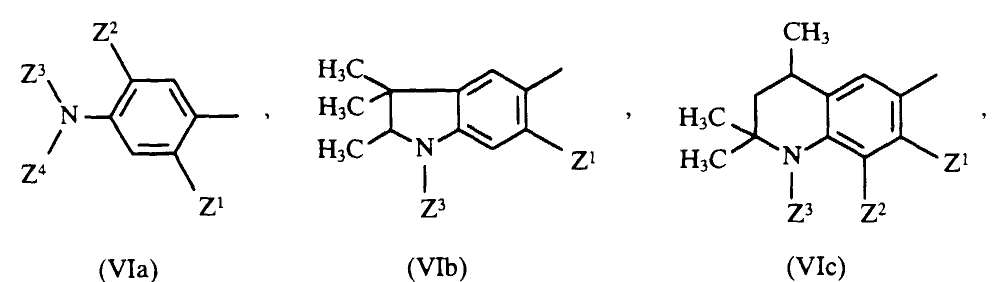 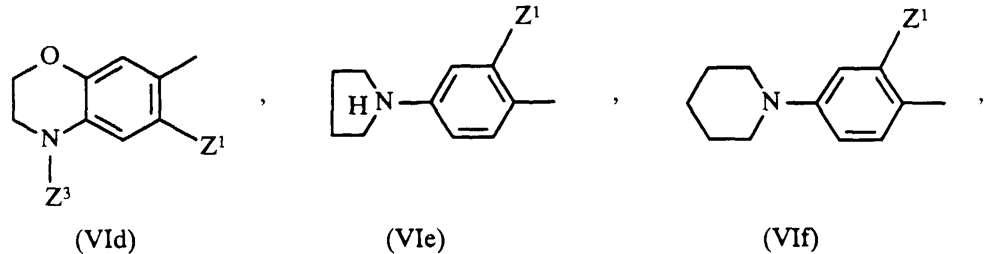 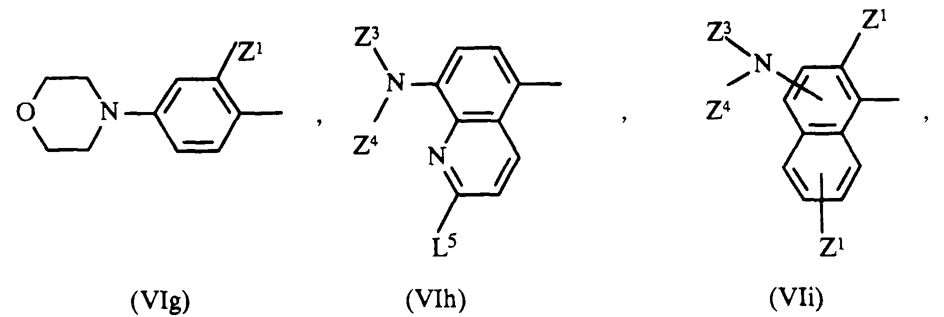 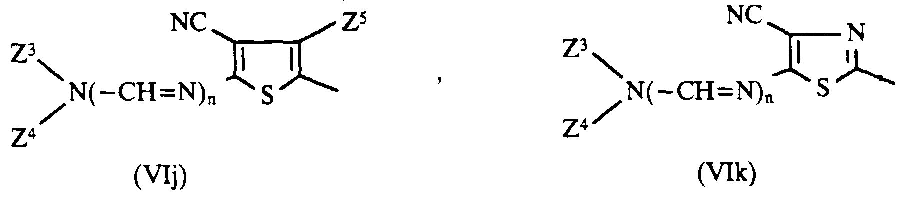 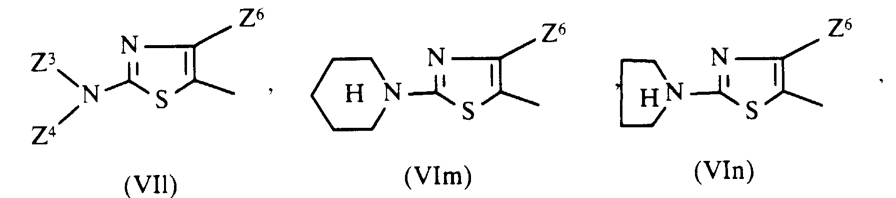 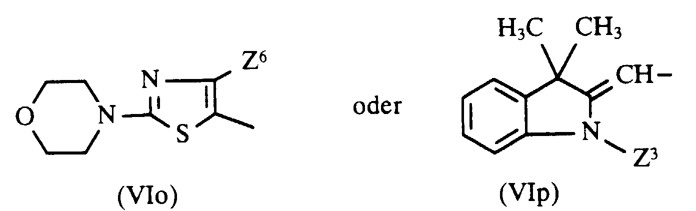 steht, worin
- n: 0 oder 1,
- Z¹: Wasserstoff, C₁-C₈-Alkyl, das gegebenenfalls durch 1 oder 2 Sauerstoffatome in Etherfunktion unterbrochen ist, Methoxy, Ethoxy, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₈-Alkyl, das gegebenenfalls durch ein oder zwei Sauerstoffatome in Etherfunktion unterbrochen ist, besitzt,
- Z²: Wasserstoff, Methyl, Methoxy oder Ethoxy,
- Z³ und Z⁴: gleich oder verschieden sind und unabhängig voneinander jeweils Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom einen fünf- oder sechsgliedrigen gesättigten heterocyclischen Rest, der gegebenenfalls weitere Heteroatome enthält,
- Z⁵: Halogen und
- Z⁶: Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino bedeuten und
- L⁵: die obengenannte Bedeutung besitzt.

Alle in den obengenannten Formeln auftretenden Alkyl-, Alkylen- und Alkenylgruppen können sowohl geradkettig als auch verzweigt sein.

Wenn in den genannten Formeln substituierte Alkylgruppen auftreten, so können, sofern nicht anders vermekt, als Substituenten z.B. Cyano, Phenyl, Tolyl, C₁-C₆-Alkanoyloxy, C₁-C₄-Alkoxycarbonyl oder C₁-C₄-Alkoxycarbonyloxy, wobei im letzten Fall die Alkoxygruppe durch Phenyl oder C₁-C₄-Alkoxy substituiert sein kann, in Betracht kommen.

Wenn in den genannten Formeln substituierte Phenyl- oder Pyridylgruppen auftreten, so können als Substituenten z.B. Halogen, C₁-C₄-Alkyl- oder C₁-C₄-Alkoxy in Betracht kommen.

Reste E sind z.B. Ethylen, 1,2- oder 1,3-Propylen, 1,2-, 1,3-, 1,4- oder 2,3-Butylen, Pentamethylen, Hexamethylen oder 2-Methylpentamethylen.

Geeignete Reste R¹, R², R³, R⁴, R⁵, Z¹, R⁷, R⁸, R⁹, R¹⁰, R¹³, R¹⁴, R¹⁵, R¹⁷, R¹⁸, L¹, L⁵, L⁶, L⁷, Q¹, Q², Z¹, Z³, Z⁴, Z⁶ und Z⁷ sind z.B. Methyl, Ethyl, Propyl, Isopropyl, Butyl, Isobutyl, sec-Butyl oder tert-Butyl.

Reste R¹, R², R³, R⁷, R⁸, R⁹, R¹⁰, R¹⁷, R¹⁸, L¹, L⁶, L⁷, Q¹, Q², Z¹, Z³, Z⁴, Z⁶ und Z⁷ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste R¹, R², R³, R⁷, R⁸, R⁹ R¹⁷, R¹⁸, L¹, L⁶ und L⁷ sind weiterhin z.B. Nonyl, Isononyl, Decyl, Isodecyl, Undecyl oder Dodecyl.

Reste R¹, R², R³ und L¹ sind weiterhin z.B. Tridecyl, Isotridecyl, Tetradecyl, Pentadecyl, Hexadecyl, Heptadecyl, Octadecyl, Nonadecyl oder Eicosyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Enzyklopädie der technischen Chemie, 4. Auflage, Band 7, Seiten 215 bis 217 sowie Band 11, Seiten 435 und 436).).

Reste R¹ R², R³, R⁷, R⁸, R¹⁷, R¹⁸, Q², L¹, Z¹ und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl oder 2- oder 4-Butoxybutyl.

Reste R¹⁰, R¹³ und R¹⁴ sind weiterhin beispielsweise Methoxy, Ethoxy, Propoxy, Isopropoxy, Butoxy, Isobutoxy oder sec-Butoxy.

Reste R¹⁰ sind weiterhin z.B. Pentyloxy, Isopentyloxy, Neopentyloxy, Hexyloxy, Heptyloxy, Octyloxy, 2-Ethylhexyloxy, Methylthio, Ethylthio, Propylthio, Isopropylthio, Butylthio, Pentylthio, Hexylthio, Heptylthio, Octylthio oder 2-Ethylhexylthio.

Reste R¹, R², R³, L¹, Q² und Z¹ sind weiterhin z.B. 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl oder 4,8-Dioxadecyl.

Reste L¹ sind weiterhin z.B. 3,6,9-Trioxadecyl, 3,6,9-Trioxaundecyl, 3,6,9,12-Tetraoxatridecyl, 3,6,9,12-Tetraoxatetradecyl, 2-Methoxycarbonylethyl, Benzyl, 1- oder 2-Phenylethyl, 3-Benzyloxypropyl oder 2-, 3-oder 4-Chlorphenyl.

Reste L³ sind z.B. Methoxycarbonyl, Ethoxycarbonyl, Propoxycarbonyl, Isopropoxycarbonyl, Butoxycarbonyl, Isobutoxycarbonyl, Isobutoxycarbonyl oder sec-Butoxycarbonyl.

Reste R¹, R², R³, L¹ und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste L⁶ und L⁷ sind weiterhin z.B. Phenyl, 2-, 3- oder 4-Methylphenyl, 2-, 3- oder 4-Methoxyphenyl, Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methoxycarbonyl, Ethoxycarbonyl, Propoxycarbonyl, Isopropoxycarbonyl, Butoxycarbonyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, lylsulfonyl, Pyridylsulfonyl, Benzoyl, 2-, 3- oder 4-Methylbenzoyl, 2-, 3- oder 4-Methoxybenzoyl, Thien-2-ylcarbonyl oder Thien-3-ylcarbonyl.

Reste R¹, R², R³, Q², L⁶, L⁷, Z³ und Z⁴ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Ethoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste Q², L⁶, L⁷, Z³ und Z⁴ sind weiterhin z.B. Benzyl, 2-Methylbenzyl, 1- oder 2-Phenylethyl, Cyclopentyl, Cyclohexyl, Cycloheptyl oder 2-, 3- oder 4-Methylphenyl.

Reste Z¹ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste Z⁶ sind weiterhin, wie auch Reste Z⁵, z.B. Fluor, Chlor oder Brom.

Reste Z⁶ sind weiterhin z.B. Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Reste Z³ und Z⁴ sind weiterhin z.B. Allyl oder Methallyl.

Wenn L⁶ und L⁷ oder Z³ und Z⁴ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Bevorzugte Mischungspartner sind Azofarbstoffe der Formel I, in der R⁴ Methyl und R¹, R² und R³ unabhängig voneinander jeweils Wasserstoff, Alkyl oder Alkoxyalkyl, wobei diese Reste jeweils bis zu 15 Kohlenstoffatome aufweisen können und durch Phenyl, C₁-C₄-Alkylphenyl, C₁-C₄-Alkoxyphenyl oder Cyano substituiert sein können, oder einen Rest der Formel

[-(CH₂)₃-O]ₚ[-CH₂-CH₂-O]ₙ-R⁶ ,

bedeuten, worin
- n: für 1, 2, 3 oder 4,
- p: für 0 oder 1 und
- R⁶: für C₁-C₄-Alkyl oder Phenyl stehen.

Weiterhin bevorzugte Mischungspartner sind Azofarbstoffe der Formel I, in der der Rest D sich von einer Diazokomponente ableitet, die der Formel Va, Vb, Vd oder Vf gehorcht, wobei R⁷, R⁸ und R⁹ unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen können, Wasserstoff, Cyano, Halogen, Nitro oder einen Rest der Formel -CO-OR¹⁹, -CO-NR¹⁹R²⁰, -SO₂-R¹⁹, -SO₂-OR¹⁹ oder -SO₂-NR¹⁹R²⁰, worin R¹⁹ und R²⁰ unabhängig voneinander jeweils für Alkyl, Alkoxyalkyl, Alkoxycarbonylalkyl oder Alkanoyloxyalkyl, wobei die Reste jeweils bis zu 10 Kohlenstoffatome aufweisen können, Wasserstoff oder für einen Rest der Formel

[-CH₂-CH₂-O]ₙ-R⁵ ,

in der R⁵ und n jeweils die oben genannte Bedeutung besitzen, stehen, bedeuten.

Weiterhin bevorzugte Mischungspartner sind Azofarbstoffe der Formel I, in der der Rest D sich von einer Diazokomponente ableitet, die der Formel Vc gehorcht, wobei
- R¹⁰: Wasserstoff, Chlor, C₁-C₈-Alkyl, gegebenenfalls durch C₁-C₄-Alkyl oder C₁-C₄-Alkoxy substituiertes Phenyl oder Benzyl,
- R¹¹: Cyano oder einen Rest der Formel -CO-OR¹⁹ oder -CO-NR¹⁹R²⁰, worin R¹⁹ und R²⁰ jeweils die obengenannte Bedeutung besitzen und
- R¹²: einen Rest der Formel 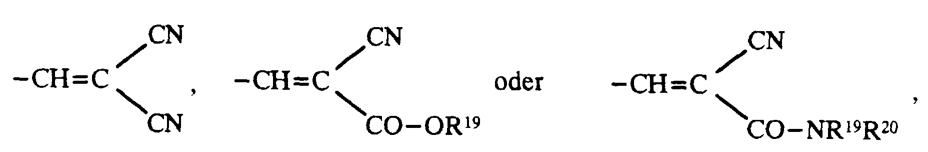 worin R¹⁹ und R²⁰ jeweils die obengenannte Bedeutung besitzen, bedeuten.

Weiterhin bevorzugte Mischungspartner sind Azofarbstoffe der Formel I, in der der Rest D sich von einer Diazokomponente ableitet, die der Formel Ve gehorcht, wobei
- R¹⁰: Wasserstoff, Chlor, C₁-C₈-Alkyl, gegebenenfalls durch C₁-C₄-Alkyl oder C₁-C₄-Alkoxy substituiertes Phenyl oder Benzyl und
- R¹²: Cyano, Nitro, Formyl oder einen Rest der Formel -CO-OR¹⁹, wobei R¹⁹ die obengenannte Bedeutung besitzt, bedeuten.

Weiterhin bevorzugte Mischungspartner sind Azofarbstoffe der Formel I, in der der Rest D sich von einer Diazokomponente ableitet, die der Formel Vg gehorcht, wobei
- R¹⁰: C₁-C₈-Alkyl, C₁-C₈-Alkoxy, Alkoxyalkyl, das bis zu 8 Kohlenstoffatome aufweisen kann, gegebenenfalls durch C₁-C₄-Alkyl oder C₁-C₄-Alkoxy substituiertes Phenyl, Benzyl oder Benzyloxy und
- R¹¹: Cyano, Nitro oder den Rest der Formel -CO-OR¹⁹, wobei R¹⁹ die obengenannte Bedeutung besitzt, bedeuten.

Weiterhin bevorzugte Mischungspartner sind Azofarbstoffe der Formel I, in der der Rest D sich von einer Diazokomponente ableitet, die der Formel Vc gehorcht, wobei
- R¹⁰: Wasserstoff, Chlor, C₁-C₈-Alkyl, C₁-C₈-Alkoxy, Alkoxyalkyl, das bis zu 8 Kohlenstoffatome aufweisen kann, gebenenfalls durch C₁-C₄-Alkyl oder C₁-C₄-Alkoxy substituiertes Phenyl, Benzyl oder den Rest der Formel -CO-OR¹⁹, wobei R¹⁹ die obengenannte Bedeutung besitzt,
- R¹¹: Cyano oder den Rest der Formel -CO-OR¹⁹, wobei R¹⁹ die obengenannte Bedeutung besitzt und
- R¹²: Cyano, Nitro, Formyl oder den Rest der Formel -CO-OR¹⁹, wobei R¹⁹ die obengenannte Bedeutung besitzt, bedeuten.

Besonders interessante Mischungspartner sind Azofarbstoffe der Formel I, in der der Rest D sich von einer Diazokomponente ableitet, die der Formel Va, Vb, Vc, Vd, Ve, Vf oder Vg gehorcht.

Besonders interessante Mischungspartner sind weiterhin Azofarbstoffe der Formel I, in der der Rest D sich von einer Diazokomponente ableitet, die der Formel 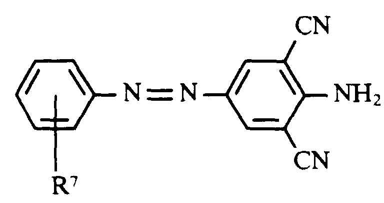 gehorcht, worin R⁷ die obengenannte Bedeutung besitzt.

Bevorzugte Mischungspartner sind auch Farbstoffe der Formel II oder III, worin L³ Cyano bedeutet.

Bevorzugte Mischungspartner sind weiterhin auch Farbstoffe der Formel II oder III, worin L² sich von einer Komponente aus der Benzol-, Indol-, Chinolin-, Aminonaphthalin-, Aminothiazol- oder Aminothiophenreihe ableitet.

Bevorzugte Mischungspartner sind weiterhin auch Farbstoffe der Formel II oder III, worin L¹ C₁-C₁₂-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Besonders bevorzugte Mischungspartner sind auch Farbstoffe der Formel II oder III, worin L¹ Alkyl, Alkoxyalkyl, Alkanoyloxyalkyl oder Alkoxycarbonylalkyl, wobei diese Reste jeweils bis zu 12 Kohlenstoffatome aufweisen können, gegebenenfalls durch Methyl substituiertes Benzyl oder gegebenenfalls durch Methyl substituiertes Phenyl bedeutet.

Besonders bevorzugte Mischungspartner sind weiterhin auch Farbstoffe der Formel II oder III, worin L² einen Rest der obengenannten Formel VIa, VIc, VIl, VIm, VIn oder VIo bedeutet.

Bevorzugt als Mischungspartner sind auch Farbstoffe der Formel IV, in der L² einen Rest der Formel VIa, VIc, VIl, VIm, VIn, VIo oder VIp bedeutet, wobei ein Rest der Formel VIc oder VIl besonders zu nennen ist.

Besonders als Mischungspartner hervorzuheben sind auch Farbstoffe der Formel IVa 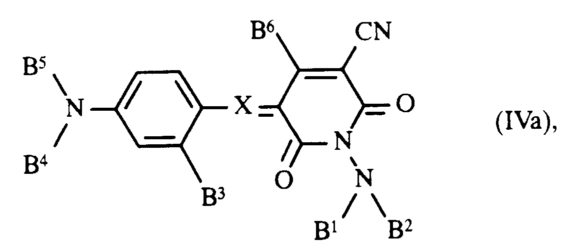 in der
- X: CH oder Stickstoff,
- B¹ und B²: unabhängig voneinander jeweils Wasserstoff, C₁-C₈-Alkyl, Phenyl, Tolyl, C₁-C₈-Alkylcarbonyl, C₁-C₈-Alkylsulfonyl, Phenylsulfonyl, Tolylsulfonyl, Pyridylsulfonyl, Benzoyl, Methylbenzoyl, Pyridylcarbonyl oder Thienylcarbonyl,
- B³: Wasserstoff, Methyl, Methoxy oder den Rest -NHCOR¹⁰ oder -NHCO₂R¹⁰, worin R¹⁰ für Phenyl, Benzyl, Tolyl oder C₁-C₈-Alkyl, das gegebenenfalls durch ein oder zwei Sauerstoffatome in Etherfunktion unterbrochen ist, steht,
- B⁴ und B⁵: unabhängig voneinander Wasserstoff, C₁-C₈-Alkyl, 2-Cyanoethyl, Benzyl, C₁-C₄-Alkanoyloxy-C₂-C₄-alkyl, C₁-C₄-Alkoxycarbonyl-C₁-C₄-alkyl oder C₁-C₄-Alkoxycarbonyloxy-C₂-C₄-alkyl und
- B⁶: Wasserstoff oder Methyl bedeuten.

Besonders als Mischungspartner hervorzuheben sind weiterhin auch Farbstoffe der Formel IVb 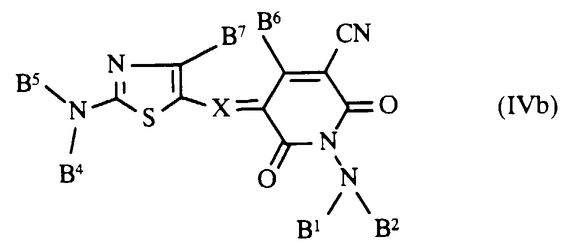 in der X CH oder Stickstoff, B⁷ C₁-C₆-Alkyl, Phenyl, Tolyl, Anisidyl, Benzyl, Cyclohexyl oder Thienyl bedeutet und B¹, B², B⁴, B⁵ und B⁶ jeweils die unter Formel IVa genannte Bedeutung besitzen.

Ganz besonders hervorzuheben sind Farbstoffe der Formel IVa oder IVb, in der B¹ und B² unabhängig voneinander jeweils C₁-C₈-Alkylcarbonyl, Benzoyl, Methylbenzoyl oder Thienylcarbonyl bedeuten.

Ganz besonders hervorzuheben sind weiterhin Farbstoffe der Formel VIb, in der X CH bedeutet.

Hervorzuheben sind Farbstoffmischungen, enthaltend einen Azofarbstoff der Formel I sowie einen Farbstoff der Formel II.

Hervorzuheben sind weiterhin Farbstoffmischungen, enthaltend einen Azofarbstoff der Formel I sowie einen Farbstoff der Formel III.

Hervorzuheben sind weiterhin Farbstoffmischungen, enthaltend einen Azofarbstoff der Formel I sowie einen Farbstoff der Formel IV.

Besonders hervorzuheben sind Farbstoffmischungen, enthaltend einen Azofarbstoff der Formel I, in der D einen Rest bedeutet, der sich von einer Diazokomponente der Formel Vc oder Vg, insbesondere Vc, ableitet, und einen Farbstoff der Formel II, in der L² einen Rest der Formel VIl bedeutet.

Weiterhin besonders hervorzuheben sind Farbstoffmischungen, enthaltend einen Azofarbstoff der Formel I, in der D einen Rest bedeutet, der sich von einer Diazokomponente der Formel Vc und Vg, insbesondere Vc, ableitet, und einen Farbstoff der Formel III, in der L² einen Rest der Formel VIl bedeutet.

Weiterhin hervorzuheben sind Farbstoffmischungen, enthaltend einen Azofarbstoff der Formel I, in der D einen Rest bedeutet, der sich von einer Diazokomponente der Formel Vc oder Vg, insbesondere Vc, ableitet, und einen Farbstoff der Formel IV, in der L² einen Rest der Formel VIl bedeutet.

Die erfindungsgemäßen Farbstoffmischungen enthalten in der Regel 10 bis 90 Gew.%, vorzugsweise 40 bis 80 Gew.% und insbesondere 40 bis 60Gew.%, jeweils bezogen auf das Gewicht der Farbstoffmischung, einen oder mehrere Azofarbstoffe der Formel I sowie 10 bis 90 Gew.%, vorzugsweise 20 bis 60 Gew.% und insbesondere 40 bis 60 Gew.%, jeweils bezogen auf das Gewicht der Farbstoffmischung, einen oder mehrere Farbstoffe der Formel II, III und/oder IV.

Die neuen Farbstoffmischungen können nach an sich bekannten Methoden, z.B. durch Abmischen der Einzelfarbstoffe im obengenannten Gewichtsverhältnis erhalten werden.

Die Azofarbstoffe der Formel I sind an sich bekannt und z.B. in der US-A-4 939 118 beschrieben oder können nach den dort genannten Methoden erhalten werden.

Die Farbstoffe der Formel II, III und IV sind ebenfalls bekannt und z.B. in der US-A-5 079 365 sowie in der älteren Patentanmeldung PCT/EP/92/00505 beschrieben.

Die erfindungsgemäßen Farbstoffmischungen zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Drucktinte, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und gewährleisten eine flexible coloristische Anpassung an die restlichen subtraktiven Grundfarben, wodurch hochwertige Farbenräume resultieren.

Insbesondere hervorzuheben ist die spektral gleichmäßige Abnahme der Einzelkomponenten bei Bestrahlung, d.h. der Einzelfarbstoff mit der geringeren Lichtechtheit nimmt nicht bevorzugt ab.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich eine eingangs näher bezeichnete Farbstoffmischung befindet.

Zur Herstellung der für das erfindungsgemäße Verfahren benötigten Farbstoffträger werden die Farbstoffmischungen in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffmischung vorzugsweise in molekular-dispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffmischung auftritt.

Solche Bindemittel sind beispielsweise in der EP-A-441 282 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyrat, Polyvinylacetat, Cellulosepropionat oder gesättigte lineare Polyester.

Das Gewichtsverhältnis Bindemittel:Farbstoffmischung beträgt im allgemeinen 1:1 bis 10:1.

Als Hilfsmittel kommen z.B. Trennmittel in Betracht, wie sie in der EP-A-441 282 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der EP-A-441 282 oder in den entsprechenden dort zitierten Patentanmeldungen beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der EP-A-441 282 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffmischungen eignen sich weiterhin vorteilhaft zum Färben von synthetischen Materialien, z.B. von Polyestern, Polyamiden oder Polycarbonaten. Insbesondere zu nennen sind textile Gewebe aus Polyester oder Polyamid oder Polyester-Baumwolle-Mischgewebe.

Die neuen Farbstoffmischungen eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

### Beispiele

In der folgenden Tabelle 1 sind die Einzelfarbstoffe aufgeführt, die als Mischungspartner dienten.

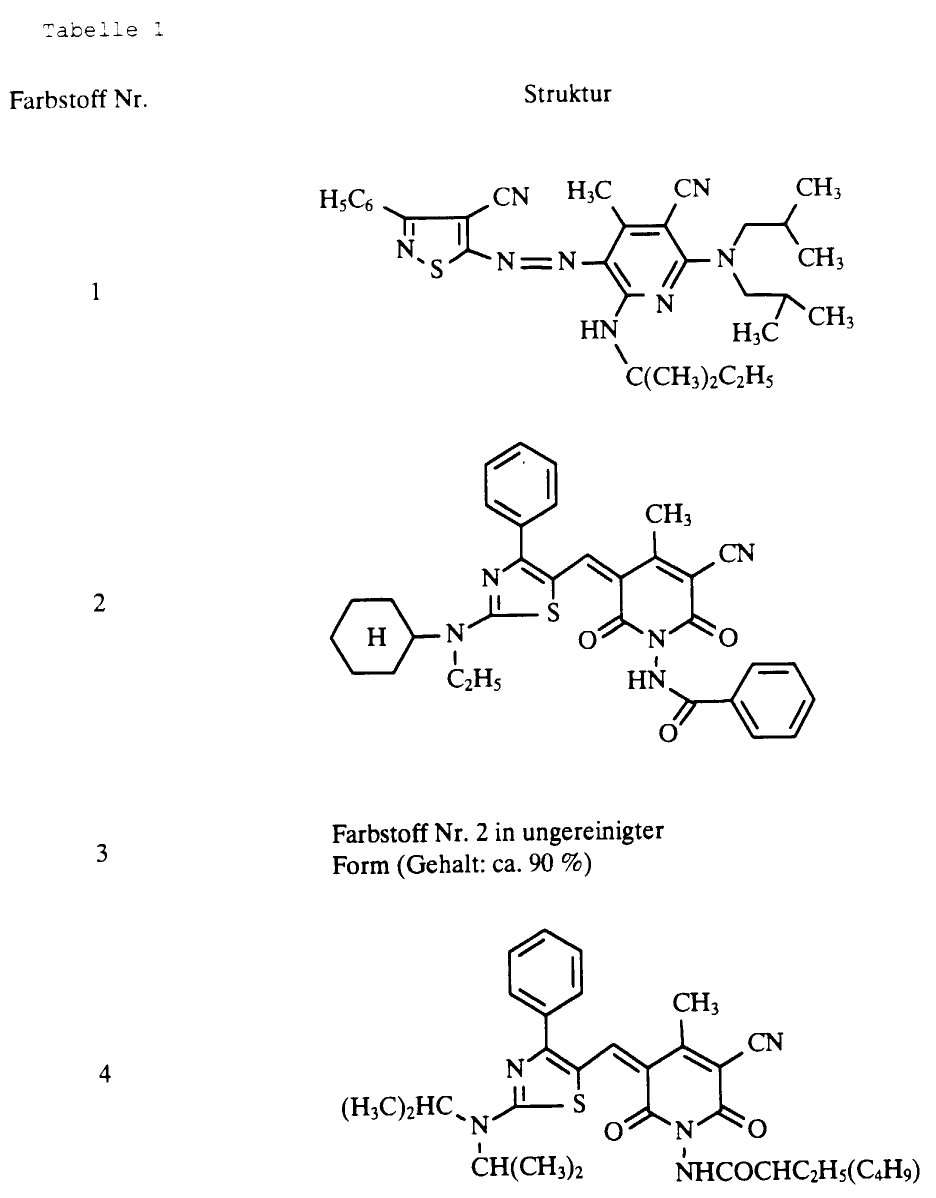

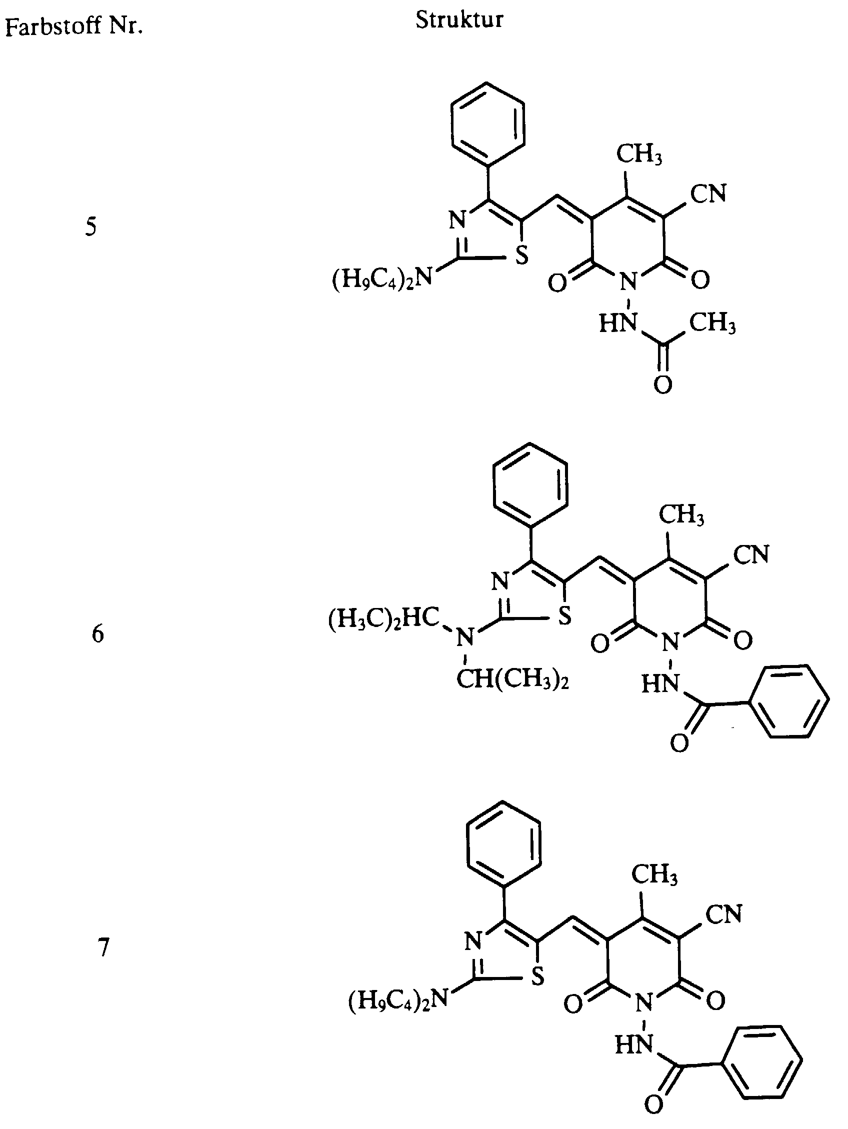

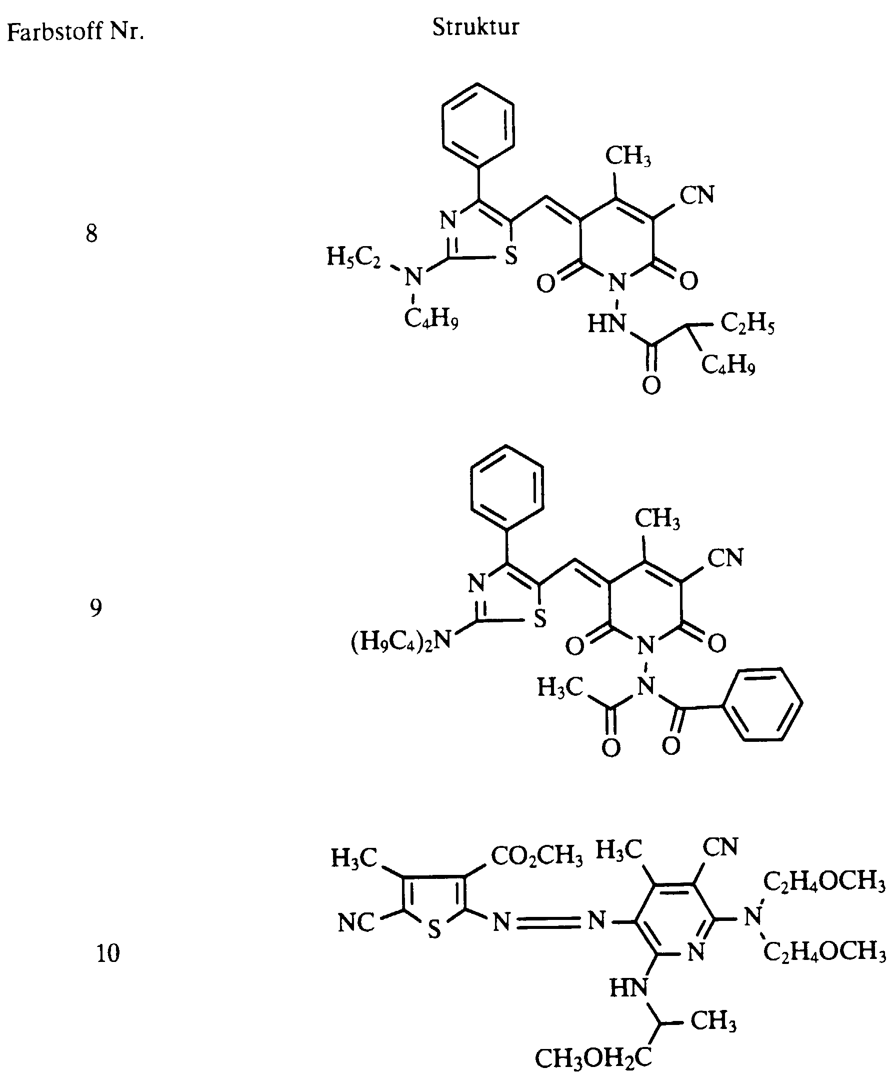

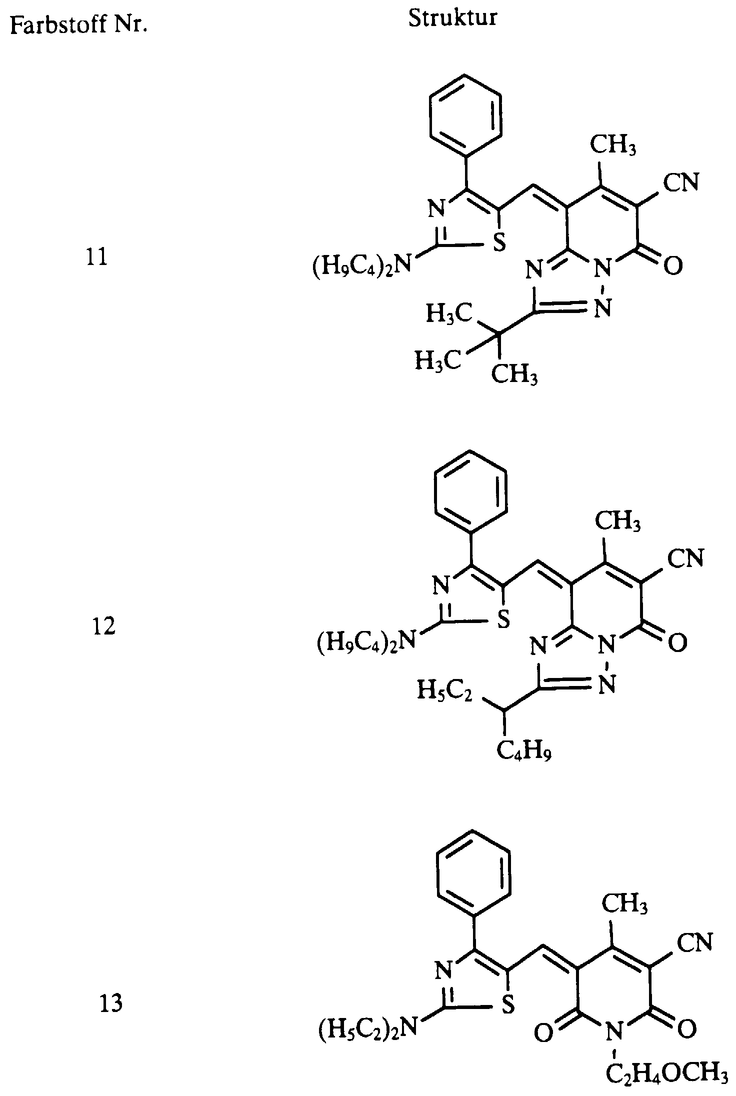

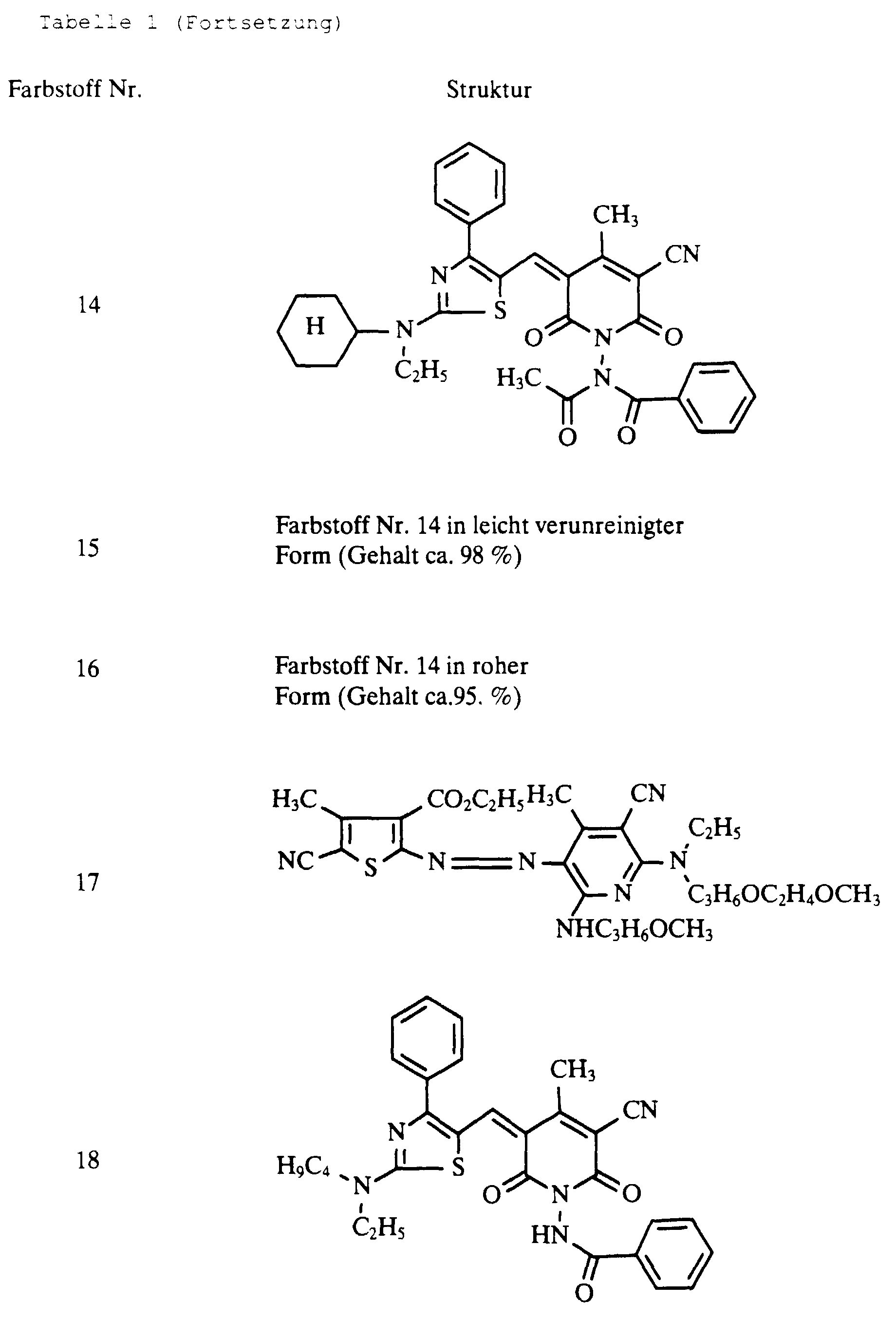

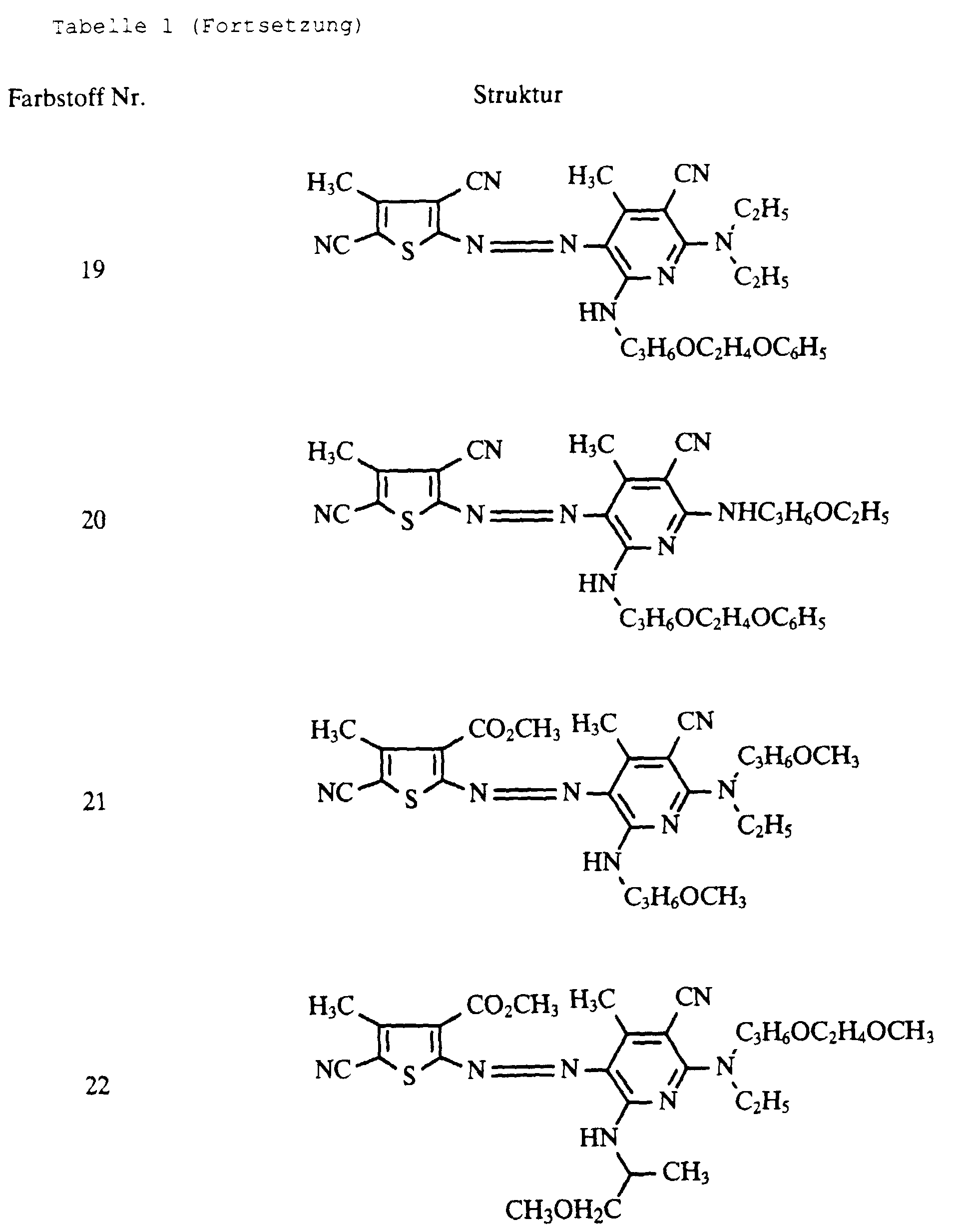

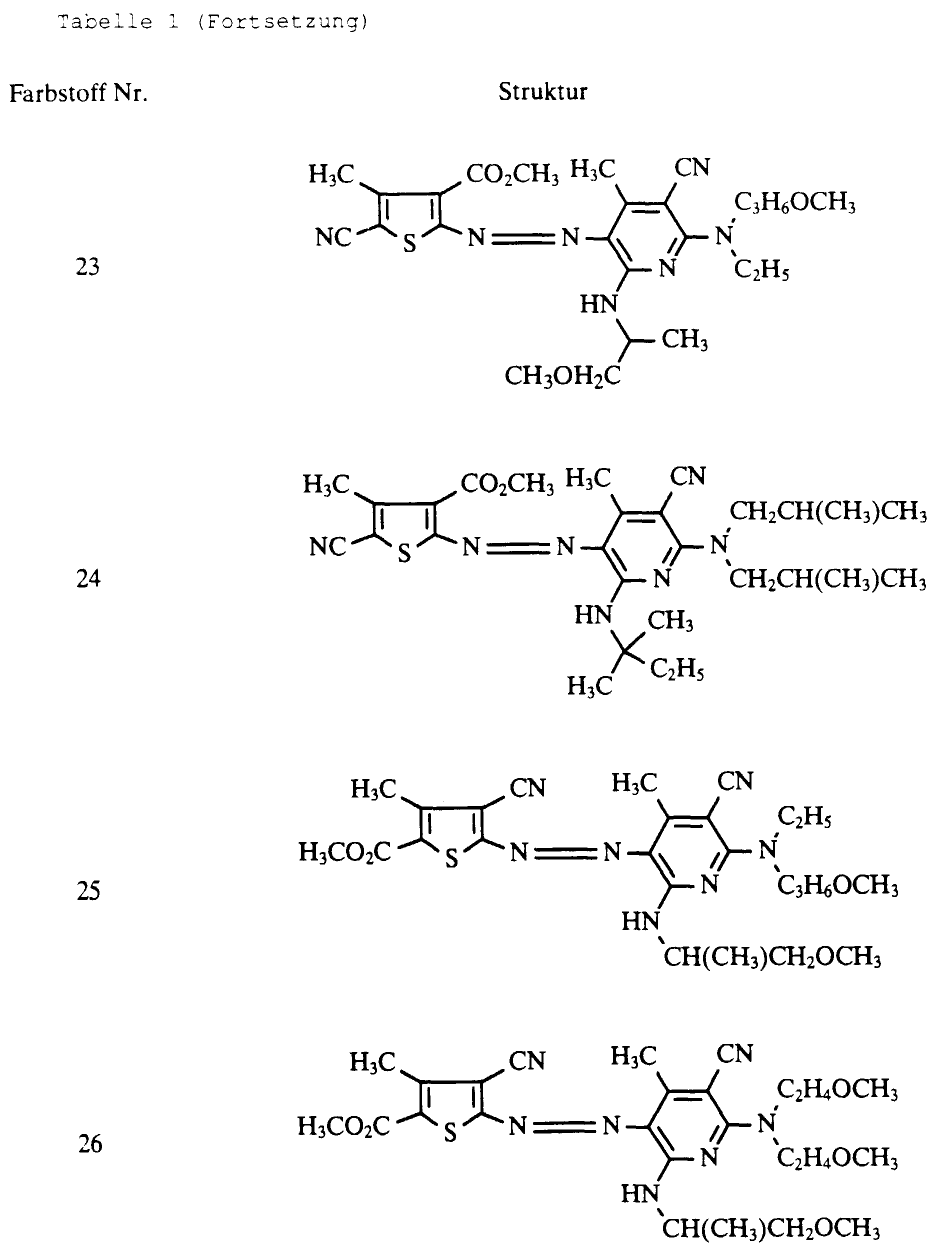

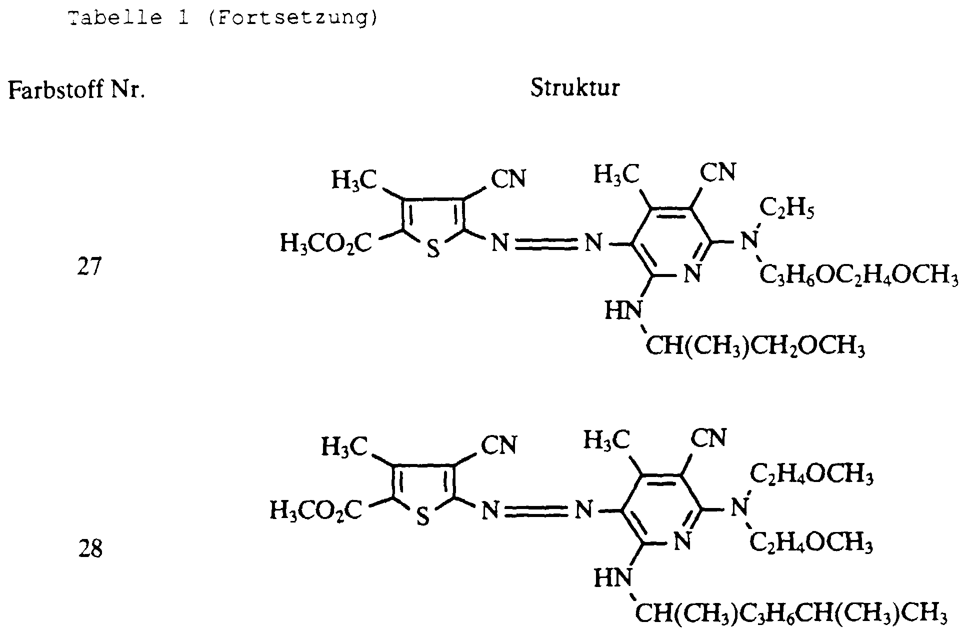

In der folgenden Tabelle 2 sind die Lichtechtheit (LE) der Einzelfarbstoffe 1 bis 28 sowie ihre thermische Stabilität (TS) aufgeführt. Als Wert für die Beurteilung der Lichtechtheit ist (hier und in den folgenden Tabellen) die Anzahl der Bestrahlungsstunden angegeben, nach der 20 % der ursprünglich vorhandenen Farbstoffmenge zerstört war.
Die thermische Stabilität wird durch Lagern der Drucke im Trockenschrank (1 Woche bei 70°C) beurteilt. Sie wird durch Noten beurteilt, die von 1 bis 6 reichen. Die Note 1 steht für sehr gut, die Note 6 für ungenügend.

**Tabelle 2**

| Farbstoff Nr. | LE | TS |
|---|---|---|
| 1 | 300 | 1 |
| 2 | 40 | 3+ |
| 3 | 11 | 2+ |
| 4 | 12 | 2 |
| 5 | 28 | 3 |
| 6 | 14 | 1 |
| 7 | 13 | 1 |
| 8 | 8 | 1 |
| 9 | 43 | 2+ |
| 10 | 136 | 2+ |
| 11 | 9 | 2 |
| 12 | 8 | 4 |
| 13 | 14 | 2+ |
| 14 | 40 | 3+ |
| 15 | 45 | 2 |
| 16 | 31 | 3 |
| 17 | 77 | 1 |
| 18 | 7 | 2+ |
| 19 | 102 | 1 |
| 20 | 75 | 1 |
| 21 | 139 | 1 |
| 22 | 162 | 1 |
| 23 | | |
| 24 | 142 | 2 |
| 25 | 59 | 1 |
| 26 | 63 | 3 |
| 27 | 72 | 2+ |
| 28 | 67 | 3 |

Die im folgenden verwendeten Farbstoffmischungen weisen alle ein Massenverhältnis von 1:1 der Farbstoffe auf.

Allgemeine Vorschrift:
a) 10 g Farbstoffmischung werden, gegebenenfalls unter kurzzeitigem Erwärmen auf 80 bis 90°C, in 100 g einer 10 gew.%igen Lösung eines Bindemittels (Vylon® 290 der Firma Toyobo) in einem Methylethylketon/Toluol/Cyclohexanon-Gemisch (4,5:2:2 v/v/v) eingerührt.
   Die Drucktinte wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf Hitachi VY-S Videoprinterpapier verdruckt.
   Durch Veränderung der Spannung wird die Energieabgabe des Thermokopfs gesteuert, wobei die eingestellte Impulsdauer 7ms beträgt und immer nur ein Impuls abgegeben wird. Die abgegebene Energie liegt zwischen 0,7 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q∗-Wert (= Energie in mJ für den Extinktionswert 1) und die Steigung m in 1/mJ ermittelt.

Die erhaltenen Ergebnisse sind in der folgenden Tabelle 3 aufgeführt, wobei zusätzlich noch die Lichtechtheit sowie die thermische Stabilität angegeben sind.

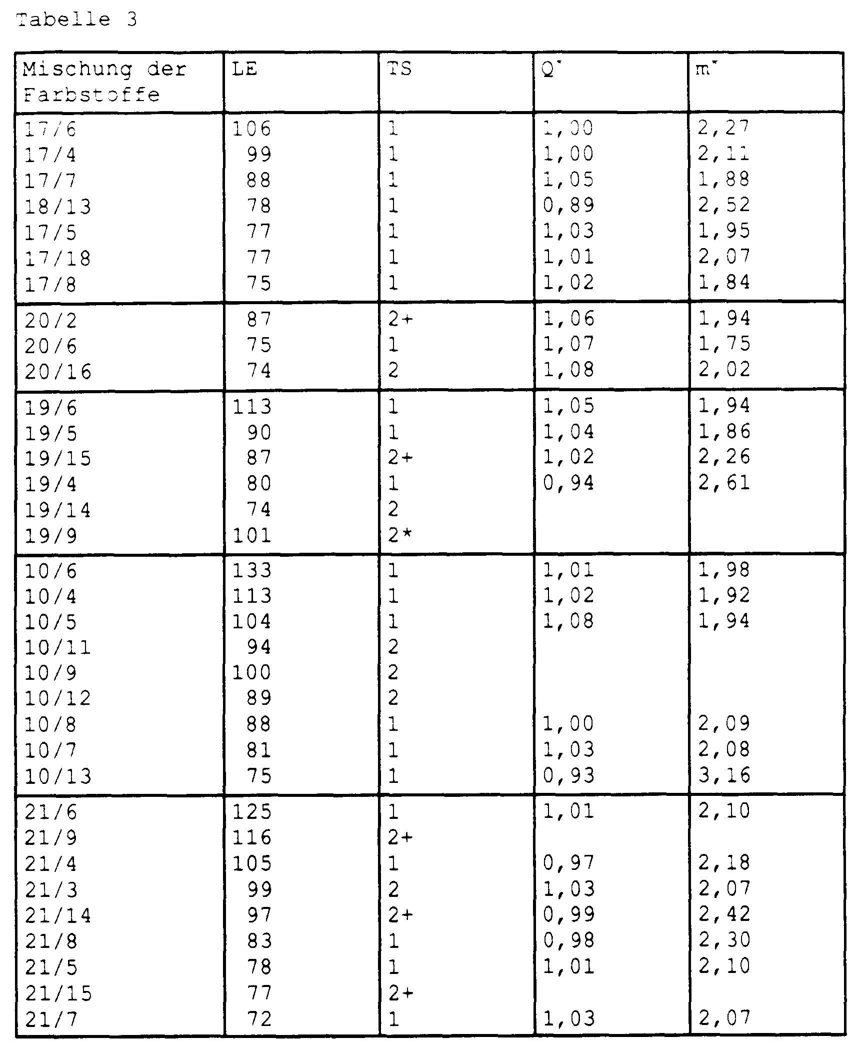

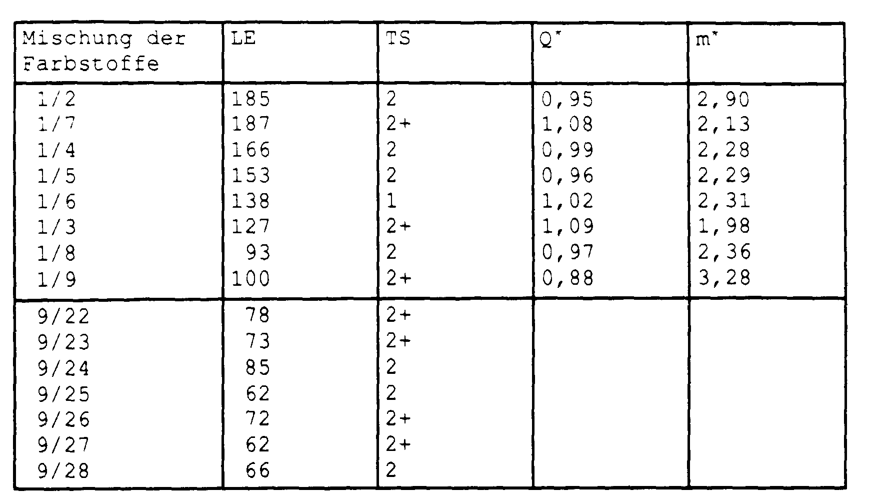

## Patentansprüche

1. Farbstoffmischungen, enthaltend mindestens einen Azofarbstoff der Formel I 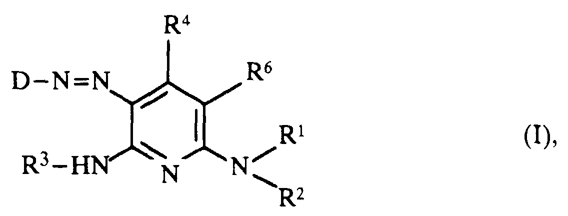 in der
R¹, R² und R³ gleich oder verschieden sind und unabhängig voneinander jeweils Alkyl, Alkoxyalkyl, Alkanoyloxyalkyl, Alkoxycarbonyloxyalkyl oder Alkoxycarbonylalkyl, wobei diese Reste jeweils bis zu 20 Kohlenstoffatome aufweisen können und durch Phenyl, C₁-C₄-Alkylphenyl, C₁-C₄-Alkoxyphenyl, Halogenphenyl, Benzyloxy, C₁-C₄-Alkylbenzyloxy, C₁-C₄-Alkoxybenzyloxy, Halogenbenzyloxy, Halogen, Hydroxy oder Cyano substituiert sein können, Wasserstoff, gegebenenfalls durch C₁-C₄-Alkyl, C₁-C₄-Alkoxy, Halogen oder Benzyloxy substituiertes Phenyl, gegebenenfalls durch C₁-C₄-Alkyl, C₁-C₄-Alkoxy, Halogen oder Benzyloxy substituiertes Cyclohexyl oder einen Rest der Formel
[-E-O]ₘ-R⁵ ,
worin
E für C₂-C₆-Alkylen
m für 1, 2, 3, 4, 5 oder 6 und
R⁵ für C₁-C₄-Alkyl oder gegebenenfalls durch C₁-C₄-Alkyl oder C₁-C₄-Alkoxy substituiertes Phenyl stehen,
R⁴ C₁-C₄-Alkyl,
R⁶ Cyano oder Carbamoyl und
D den Rest einer Diazokomponente bedeuten,
sowie mindestens einen Farbstoff der Formel II, III und/ oder IV 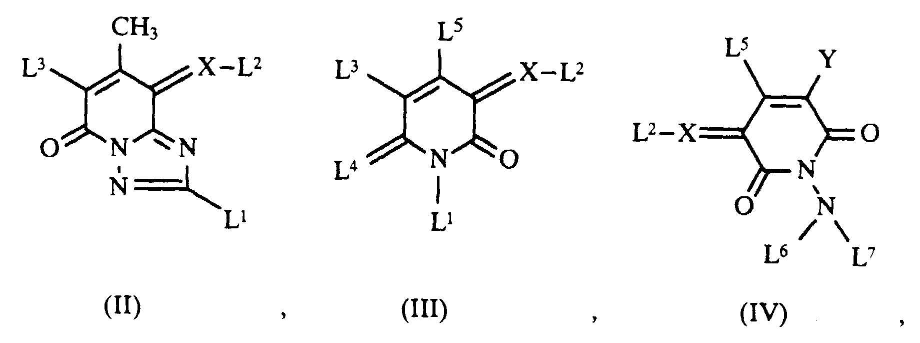 worin
L¹ C₁-C₂₀-Alkyl, das gegebenenfalls substituiert ist und durch 1 bis 4 Sauerstoffatome in Etherfunktion unterbrochen sein kann, gegebenenfalls substituiertes Phenyl oder Hydroxy,
L² einen 5- oder 6-gliedrigen carbocyclischen oder heterocyclischen Rest,
L³ Cyano, Carbamoyl, Carboxyl oder C₁-C₄-Alkoxycarbonyl,
L⁴ Sauerstoff oder einen Rest der Formel
C(CN)₂, 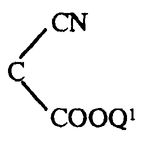
oder
C(COOQ¹)₂,
worin
Q¹ jeweils für C₁-C₈-Alkyl, das gegebenenfalls durch 1 oder 2 Sauerstoffatome in Etherfunktion unterbrochen ist, steht,
X CH oder Stickstoff,
L⁵ Wasserstoff oder C₁-C₄-Alkyl,
L⁶ und L⁷ gleich oder verschieden sind und unabhängig voneinander jeweils Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder L⁶ und L⁷ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf-oder sechsgliedrigen gesättigten heterocyclischen Rest, der gegebenenfalls weitere Heteroatome enthält, und
Y Cyano oder einen Rest der Formel CO-Q², CO-OQ² oder CO-NHQ², worin Q² für Wasserstoff, C₁-C₈-Alkyl, das gegebenenfalls substituiert ist und durch ein oder zwei Sauerstoffatome in Etherfunktion unterbrochen sein kann, C₅-C₇-Cycloalkyl, Phenyl oder Tolyl steht, bedeuten.

2. Farbstoffmischungen nach Anspruch 1, enthaltend einen Azofarbstoff der Formel I sowie einen Farbstoff der Formel II.

3. Farbstoffmischungen nach Anspruch 1, enthaltend einen Azofarbstoff der Formel I sowie einen Farbstoff der Formel III.

4. Farbstoffmischungen nach Anspruch 1, enthaltend einen Azofarbstoff der Formel I sowie einen Farbstoff der Formel IV.

5. Farbstoffmischungen nach Anspruch 1, enthaltend 10 bis 90 Gew.%, bezogen auf das Gewicht der Farbstoffmischung, einen oder mehrere Azofarbstoffe der Formel I sowie 10 bis 90 Gew.%, bezogen auf das Gewicht der Farbstoffmischung, einen oder mehrere Farbstoffe der Formel II, III und/oder IV.

6. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich eine Farbstoffmischung gemäß Anspruch 1 befindet.

## Claims

1. Dye mixtures comprising at least one azo dye of the formula I 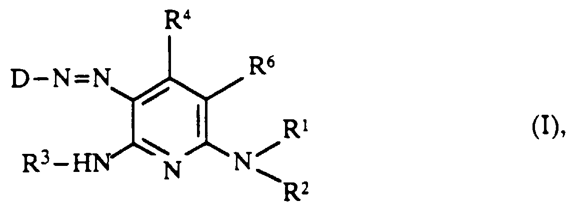 where
R¹, R² and R³ are identical or different and each is independently of the others alkyl, alkoxyalkyl, alkanoyloxyalkyl, alkoxycarbonyloxyalkyl or alkoxycarbonylalkyl, each of which may have up to 20 carbon atoms and be phenyl-, C₁-C₄-alkylphenyl-, C₁-C₄-alkoxyphenyl-, halophenyl-, benzyloxy-, C₁-C₄-alkylbenzyloxy-, C₁-C₄-alkoxybenzyloxy, halobenzyloxy-, halogen-, hydroxyl- or cyano-substituted, hydrogen, unsubstituted or C₁-C₄-alkyl-, C₁-C₄-alkoxy-, halogen- or benzyloxy-substituted phenyl, unsubstituted or C₁-C₄-alkyl-, C₁-C₄-alkoxy-, halogen- or benzyloxy-substituted cyclohexyl or a radical of the formula
[-E-O]ₘ-R⁵,
where
E is C₂-C₆-alkylene,
M is 1, 2, 3, 4, 5 or 6, and
R⁵ is C₁-C₄-alkyl or unsubstituted or C₁-C₄-alkyl- or C₁-C₄-alkoxy-substituted phenyl,
R⁴ is C₁-C₄-alkyl,
R⁶ is cyano or carbamoyl, and
D is the radical of a diazo component,
and at least one dye of the formula II, III and/or IV 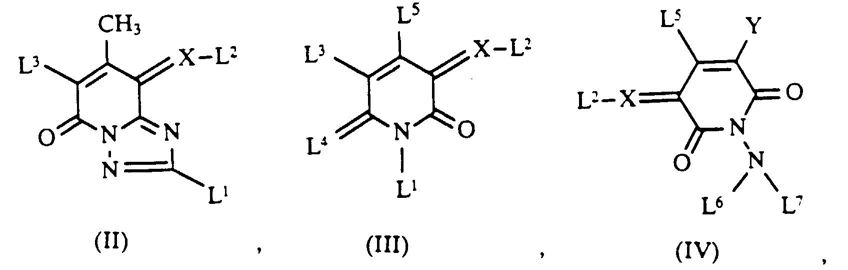 where
L¹ is C₁-C₂₀-alkyl, which may be substituted and may be interrupted by from 1 to 4 oxygen atoms in ether function, substituted or unsubstituted phenyl or hydroxyl,
L² is a 5- or 6-membered carbocyclic or heterocyclic radical,
L³ is cyano, carbamoyl, carboxyl or C₁-C₄-alkoxycarbonyl,
L⁴ is oxygen or a radical of the formula
C(CN)₂, 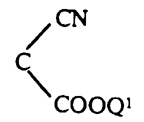
oder
C(COOQ¹)₂,
where Q¹ is in each case C₁-C₈-alkyl, which may be interrupted by 1 or 2 oxygen atoms in ether function,
X is CH or nitrogen,
L⁵ is hydrogen or C₁-C₄-alkyl,
L⁶ and L⁷ are identical or different and each is independently of the other hydrogen, substituted or unsubstituted C₁-C₁₂-alkyl, C₅-C₇-cycloalkyl, substituted or unsubstitutea phenyl, substituted or unsubstituted pyridyl, substituted or unsubstituted C₁-C₁₂-alkanoyl, C₁-C₁₂-alkoxycarbonyl, substituted or unsubstituted C₁-C₁₂-alkylsulfonyl, C₅-C₇-cycloalkylsulfonyl, substituted or unsubstituted phenylsulfonyl, substituted or unsubstituted pyridylsulfonyl, substituted or unsubstituted benzoyl, pyridylcarbonyl or thienylcarbonyl, or together with the nitrogen atom joining them together are unsubstituted or C₁-C₄-alkyl-substituted succinimido, unsubstituted or C₁-C₄-alkyl-substituted phthalimido or a five- or six-membered saturated heterocyclic radical, which may contain further hetero atoms, and
Y is cyano or a radical of the formula CO-Q², CO-OQ² or CO-NHQ², where Q² is hydrogen, C₁-C₈-alkyl, which may be substituted and may be interrupted by 1 or 2 oxygen atoms in ether function, C₅-C₇-cycloalkyl, phenyl or tolyl.

2. Dye mixtures as claimed in claim 1 comprising an azo dye of the formula I and a dye of the formula II.

3. Dye mixtures as claimed in claim 1 comprising an azo dye of the formula I and a dye of the formula III.

4. Dye mixtures as claimed in claim 1 comprising an azo dye of the formula I and a dye of the formula IV.

5. Dye mixtures as claimed in claim 1 comprising from 10 to 90% by weight, based on the weight of the dye mixture, of one or more azo dyes of the formula I and also from 10 to 90% by weight, based on the weight of the dye mixture, of one or more dyes of the formula II, III and/or IV.

6. A process for transferring dyes from a transfer to plastic-coated paper by diffusion or sublimation by means of an energy source, which comprises using a transfer on which there is a dye mixture as claimed in claim 1.

## Revendications

1. Mélanges de colorants, contenant au moins un colorant azoïque de formule I 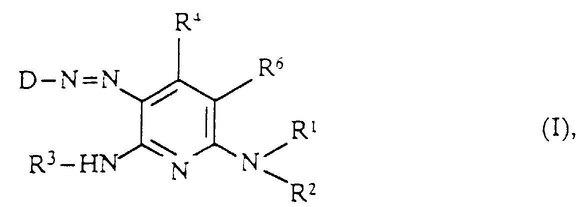 dans laquelle
R¹, R² et R³ sont identiques ou différents et représentent chacun, indépendamment les uns des autres, un reste alkyle, alcoxyalkyle, alcanoyloxyalkyle, alcoxycarbonyloxyalkyle ou alcoxycarbonylalkyle, ces restes pouvant comporter chacun jusqu'à 20 atomes de carbone et pouvant être substitués par des groupements phényle, (alkyl en C₁-C₄)phényle, (alcoxy en C₁-C₄)phényle, halogénophényle, benzyloxy, (alkyl en C₁-C₄)benzyloxy, (alcoxy en C₁-C₄)benzyloxy, halogénobenzyloxy, par des atomes d'halogène ou par des groupements hydroxy ou cyano, un atome d'hydrogène, un reste phényle éventuellement substitué par un groupement alkyle en C₁-C₄, alcoxy en C₁-C₄, par un atome d'halogène ou par un groupement benzyloxy, un reste cyclohexyle éventuellement substitué par un groupement alkyle en C₁-C₄, alcoxy en C₁-C₄, par un atome d'halogène ou par un groupement benzyloxy, ou un reste de formule
[-E-O]ₘ-R⁵
où
E est mis pour un reste alkylène en C₂-C₆,
m est mis pour 1, 2, 3, 4, 5 ou 6 et
R⁵ est mis pour un reste alkyle en C₁-C₄ ou phényle éventuellement substitué par un groupement alkyle en C₁-C₄ ou alcoxy en C₁-C₄,
R⁴ représente un reste alkyle en C₁-C₄,
R⁶ représente un reste cyano ou carbamoyle et
D représente le reste d'un composant de diazoïque,
ainsi qu'au moins un colorant de formule II, III et/ou IV 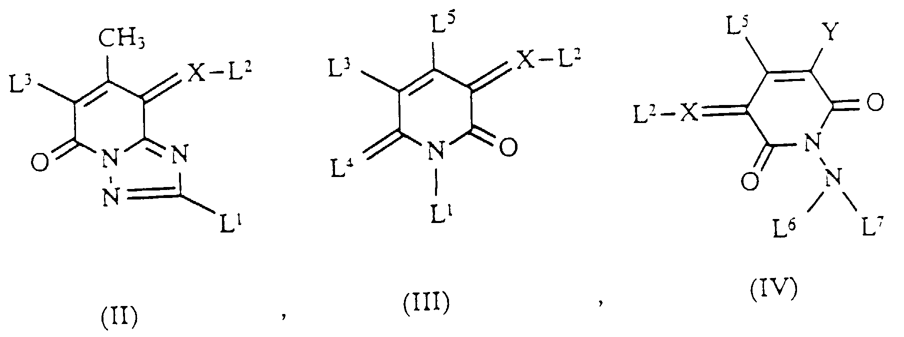 dans laquelle
L¹ représente un reste alkyle en C₁-C₂₀ qui est éventuellement substitué et peut être interrompu par 1 à 4 atomes d'oxygène en fonction éther, un reste phényle éventuellement substitué ou un reste hydroxy,
L² représente un reste carbocyclique ou hétérocyclique à 5 ou 6 chaînons,
L³ représente un reste cyano, carbamoyle, carboxyle ou (alcoxy en C₁-C₄)carbonyle,
L⁴ représente un atome d'oxygène ou un reste de formule
C(CN)₂, 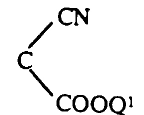
ou
C(COOQ¹)₂,
où
Q¹ est mis chaque fois pour un reste alkyle en C₁-C8 qui est éventuellement interrompu par 1 ou 2 atomes d'oxygène en fonction éther,
X représente CH ou un atome d'azote,
L⁵ représente un atome d'hydrogène ou un reste alkyle en C₁-C₄,
L⁶ et L⁷ sont identiques ou différents et représentent chacun, indépendamment l'un de l'autre, un atome d'hydrogène, un reste alkyle en C₁-C₁₂ éventuellement substitué, cycloalkyle en C₅-C₇, phényle éventuellement substitué, pyridyle éventuellement substitué, alcanoyle en C₁-C₁₂ éventuellement substitué, (alcoxy en C₁-C₁₂)carbonyle, alkylsulfonyle en C₁-C₁₂ éventuellement substitué, cycloalkylsulfonyle en C₅-C₇, phénylsulfonyle éventuellement substitué, pyridylsulfonyle éventuellement substitué, benzoyle éventuellement substitué, pyridylcarbonyle ou thiénylcarbonyle, ou L⁶ et L⁷ représentent ensemble, avec l'atome d'azote qui les relie, un reste succinimido éventuellement substitué par un groupement alkyle en C₁-C₄, phtalimido éventuellement substitué par un groupement alkyle en C₁-C₄ ou un reste hétérocyclique saturé à 5 ou 6 chaînons qui contient éventuellement d'autres hétéroatomes, et
Y représente un reste cyano ou un reste de formule CO-Q², CO-OQ² ou CO-NHQ², Q² étant mis pour un atome d'hydrogène, pour un reste alkyle en C₁-C₈ qui est éventuellement substitué et peut être interrompu par 1 ou 2 atomes d'oxygène en fonction éther, pour un reste cycloalkyle en C₅-C₇, phényle ou tolyle.

2. Mélanges de colorants selon la revendication 1, contenant un colorant azoïque de formule I, ainsi qu'un colorant de formule II.

3. Mélanges de colorants selon la revendication 1, contenant un colorant azoïque de formule I, ainsi qu'un colorant de formule III.

4. Mélanges de colorants selon la revendication 1, contenant un colorant azoïque de formule I, ainsi qu'un colorant de formule IV.

5. Mélanges de colorants selon la revendication 1, contenant 10 à 90% en poids, par rapport au poids du mélange de colorants, d'un ou de plusieurs colorants azoïques de formule I, ainsi que 10 à 90% en poids, par rapport au poids du mélange de colorants, d'un ou de plusieurs colorants de formules II, III et/ou IV.

6. Procédé de transfert de colorants entre un support et un papier enduit de matière plastique, par diffusion ou sublimation au moyen d'une source d'énergie, caractérisé en ce que l'on utilise un support sur lequel se trouve un mélange de colorants selon la revendication 1.
